# EUROPEAN PATENT APPLICATION

(11) **EP 4 814 863 A1**
(43) Date of publication of application: **30.09.2026**
(21) Application number: 25185808.0
(22) Date of filing: 27.06.2025
(51) Int. Cl.: G06T 7/00

(54) **INFORMATION PROCESSING APPARATUS, INSPECTION SYSTEM, PROGRAM, AND INFORMATION PROCESSING METHOD**

(30) Priority: 26.03.2025 JP 2025051008
(71) Applicant: FUJIFILM Business Innovation Corp., Minato-ku Tokyo (JP)
(72) Inventor: MORI, Tatsuya, Ebina-shi, Kanagawa (JP)
(74) Representative: Becker Kurig & Partner Patentanwälte mbB

(57) **Abstract**

An information processing apparatus includes: a processor configured to: input a group of captured images of a product that is a non-defective product to a pre-trained classification model, and cause the classification model to extract n (n is an integer of 1 or more) feature quantities for each local region constituting each of the captured images; and extract a feature quantity of a predetermined ratio among the extracted n feature quantities as a sample feature quantity, and store the sample feature quantity in association with information indicating a position of the local region in the captured image.

## Description

### BACKGROUND OF THE INVENTION

### (i) Field of the Invention

The present invention relates to an information processing apparatus, an inspection system, a program, and an information processing method.

### (ii) Description of Related Art

There is a method of automatically performing an appearance inspection of a product by using a classification model trained to classify the product into a non-defective product or a defective product in a case where a captured image of the product is input. In such a method, for improving accuracy of the classification model, a large amount of captured images of the non-defective product and captured images of the defective product to the same extent as learning data are beneficially collected to train the classification model. Meanwhile, normally, the number of defective products is overwhelmingly less than the number of non-defective products, and thus it is not easy to collect the captured images of the defective product to the same extent as the captured images of the non-defective product. For this reason, a case may be made in which an abnormality determination model that can perform an inspection by using only the captured image of the non-defective product which is easy to collect is constructed.

### SUMMARY OF THE INVENTION

Since Karsten Roth, Latha Pemula, Joaquin Zepeda, Bernhard Scholkopf, Thomas Brox, and Peter Gehler: Towards total recall in industrial anomaly detection, Proceedings of the IEEE/CVF Conference on Computer Vision and Pattern Recognition, pp. 14318-14328, 2022., which is a typical method of an abnormality determination model in the related art, uses only a captured image of a non-defective product, and does not consider a positional relationship in the input image as an inspection target, the method is not appropriate at detecting a logical abnormality such as a difference in disposition or a difference in number of the input images. On the other hand, as in Thomas Defard, Aleksandr Setkov, Angelique Loesch, Romaric Audigier: PaDiM: A Patch Distribution Modeling Framework for Anomaly Detection and Localization, International Conference on Pattern Recognition. Springer, pp. 475-489, 2021. and Jaehyeok Bae, Jae-Han Lee, Seyun Kim: PNI: Industrial Anomaly Detection using Position and Neighborhood Information, Proceedings of the IEEE/CVF International Conference on Computer Vision, pp. 6373-6383, 2023., an abnormality determination model that enables detection of a logical abnormality in an input image is also known. Meanwhile, such an abnormality determination model tends to increase a use amount of a memory, and thus is not appropriate for a small device having a limited processing capacity used in an inspection site of a product.

An object of the present disclosure relates to an abnormality determination model capable of detecting a logical abnormality while suppressing a use amount of a memory, as compared with an abnormality determination model that is capable of detecting a logical abnormality in an input image as an inspection target in the related art.

According to a first aspect of the present disclosure, there is provided an information processing apparatus including: a processor configured to: input a group of captured images of a product that is a non-defective product to a pre-trained classification model, and cause the classification model to extract n (n is an integer of 1 or more) feature quantities for each local region constituting each of the captured images; and extract a feature quantity of a predetermined ratio among the extracted n feature quantities as a sample feature quantity, and store the sample feature quantity in association with information indicating a position of the local region in the captured image.

According to a second aspect of the present disclosure, in the information processing apparatus according to the first aspect, the processor may be configured to: determine the ratio for each local region.

According to a third aspect of the present disclosure, in the information processing apparatus according to the second aspect, the processor may be configured to: determine the ratio according to a variation in a feature space in which a vector of the extracted n feature quantities is represented.

According to a fourth aspect of the present disclosure, in the information processing apparatus according to any one of the first to third aspects, the processor may be configured to: input a captured image of the product as an inspection target to the pre-trained classification model, and cause the classification model to extract an inspection target feature quantity for each local region in the captured image; and output information based on a difference between the extracted inspection target feature quantity and the sample feature quantity.

According to a fifth aspect of the present disclosure, in the information processing apparatus according to the fourth aspect, the processor may be configured to: in a case where a distance between the inspection target feature quantity and the sample feature quantity in a feature space in which a vector of the inspection target feature quantity and a vector of the sample feature quantity are represented exceeds a predetermined threshold value, output information indicating that the product as an inspection target is a defective product, as the information based on the difference.

According to a sixth aspect of the present disclosure, in the information processing apparatus according to the fourth aspect, the processor may be configured to: in a case where the information indicating the position of the local region constituting the captured image of the product as the inspection target has a predetermined relevance with the information indicating the position of the local region associated with the sample feature quantity, output the information based on the difference.

According to a seventh aspect of the present disclosure, in the information processing apparatus according to the sixth aspect, the processor may be configured to: in a case where coordinate information as the information indicating the position of the local region associated with the sample feature quantity is within a predetermined range, output the information based on the difference, as the information having the relevance.

According to an eighth aspect of the present disclosure, there is provided an inspection system including: an imaging section that images a product as an inspection target; and an information processing apparatus that performs an inspection based on a captured image of the product, in which the information processing apparatus has a configuration of the information processing apparatus according to any one of the first aspect to the seventh aspect.

According to a ninth aspect of the present disclosure, there is provided a program for controlling an information processing apparatus that performs an appearance inspection on a product, the program causing a computer to realize: a function of inputting a group of captured images of the product that is a non-defective product to a pre-trained classification model, and causing the classification model to extract n (n is an integer of 1 or more) feature quantities for each local region constituting each of the captured images; and a function of extracting a feature quantity of a predetermined ratio among the extracted n feature quantities as a sample feature quantity, and storing the sample feature quantity in association with information indicating a position of the local region in the captured image.

According to a tenth aspect of the present disclosure, there is provided an information processing method including: inputting a group of captured images of a product that is a non-defective product to a pre-trained classification model, and causing the classification model to extract n (n is an integer of 1 or more) feature quantities for each local region constituting each of the captured images; and extracting a feature quantity of a predetermined ratio among the extracted n feature quantities as a sample feature quantity, and storing the sample feature quantity in association with information indicating a position of the local region in the captured image.

According to the first aspect of the present invention, it is possible to construct an abnormality determination model that is capable of detecting a logical abnormality while suppressing a use amount of a memory, as compared with an abnormality determination model in the related art, which is capable of detecting the logical abnormality in an input image as an inspection target.

According to the second aspect of the present invention, a difference in the ratio of the sample feature quantity extracted from the local region can be provided. Thus, it is possible to extract the sample feature quantity according to the property of the feature quantity of the local region.

According to the third aspect of the present invention, for example, the number of sample feature quantities extracted from a local region having a feature quantity in which a difference in a shape or a color of the product is likely to occur can be increased. As a result, it is possible to improve robustness to a change included in the group of captured images of the non-defective products.

According to the fourth aspect of the present invention, it is possible to perform an appearance inspection of the product by the abnormality determination model that is capable of detecting the logical abnormality while suppressing the use amount of the memory, as compared with the abnormality determination model in the related art, which is capable of detecting the logical abnormality in the input image as an inspection target.

According to the fifth aspect of the present invention, it is possible to perform an appearance inspection of the product by the abnormality determination model that is capable of detecting the logical abnormality while suppressing the use amount of the memory, as compared with the abnormality determination model in the related art, which is capable of detecting the logical abnormality in the input image as an inspection target.

According to the sixth aspect of the present invention, even in a case where a positional deviation occurs in the input image as an inspection target, the appearance inspection by the abnormality determination model can be performed without being affected as long as the positional deviation is within a predetermined range.

According to the seventh aspect of the present invention, even in a case where a positional deviation occurs in the input image as an inspection target, the appearance inspection by the abnormality determination model can be performed without being affected as long as the positional deviation is within a predetermined range.

According to the eighth aspect of the present invention, it is possible to construct an abnormality determination model that is capable of detecting a logical abnormality while suppressing a use amount of a memory, as compared with an abnormality determination model in the related art, which is capable of detecting the logical abnormality in an input image as an inspection target.

According to the ninth aspect of the present invention, it is possible to construct an abnormality determination model that is capable of detecting a logical abnormality while suppressing a use amount of a memory, as compared with an abnormality determination model in the related art, which is capable of detecting the logical abnormality in an input image as an inspection target.

According to the tenth aspect of the present invention, it is possible to construct an abnormality determination model that is capable of detecting a logical abnormality while suppressing a use amount of a memory, as compared with an abnormality determination model in the related art, which is capable of detecting the logical abnormality in an input image as an inspection target.

### BRIEF DESCRIPTION OF THE DRAWINGS

Exemplary embodiment(s) of the present invention will be described in detail based on the following figures, wherein:
Fig. 1 is a diagram illustrating an example of an overall configuration of an inspection system to which the present exemplary embodiment is applied;
Fig. 2 is a diagram illustrating an example of a hardware configuration of an inspection device to which the present exemplary embodiment is applied;
Fig. 3 is a diagram illustrating an example of a functional configuration of a control unit of the inspection device;
Fig. 4 is a flowchart illustrating an example of a flow of a process in a training phase among processes of the inspection device;
Fig. 5 is a flowchart illustrating an example of a flow of a process in an inference phase among processes of the inspection device;
Fig. 6 is a diagram illustrating a specific example of the process in the training phase;
Fig. 7 is a diagram illustrating a specific example of the process in the inference phase;
Fig. 8 is a diagram illustrating a specific example of an inspection result; and
Figs. 9A to 9C are diagrams illustrating evaluation results of the model.

### DETAILED DESCRIPTION OF THE INVENTION

Hereinafter, exemplary embodiments of the present invention will be described in detail with reference to the accompanying drawings.

### <Configuration of Inspection System 1>

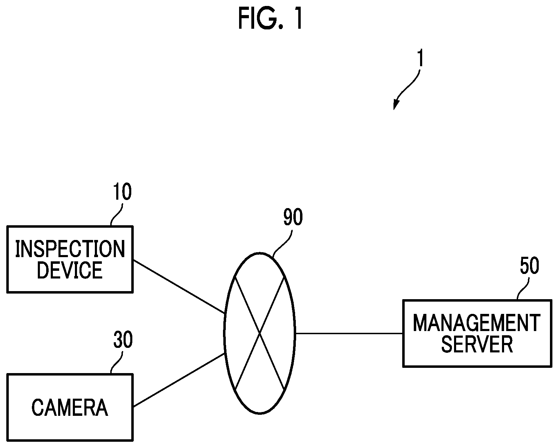

Fig. 1 is a diagram illustrating an example of an overall configuration of an inspection system 1 to which the present exemplary embodiment is applied.

The inspection system 1 is a system that constructs an abnormality determination model capable of detecting a logical abnormality while suppressing the use amount of a memory, and automates an appearance inspection for a product by using the abnormality determination model. The inspection system 1 is configured by connecting an inspection device 10, a camera 30, and a management server 50 to each other via a network 90. The network 90 is, for example, a Local Area Network (LAN), the Internet, or the like.

### [Inspection Device 10]

The inspection device 10 is an information processing apparatus for inspection disposed at an inspection site for a product. The inspection device 10 is managed by, for example, a person who inspects the product at the inspection site. The inspection device 10 is capable of acquiring various types of information transmitted from the management server 50, the camera 30, and an outside, and performing various processes. In addition, the inspection device 10 can transmit various types of information to the management server 50, the camera 30, and the outside. For example, the inspection device 10 inspects whether the product is a non-defective product or a defective product, based on a captured image of the product captured by a camera 30 to be described below.

Specifically, the inspection device 10 manages a classification model (hereinafter, referred to as "the present model") which is a deep learning model that is pre-trained with a large-scale natural image dataset, and inspects the product by using the present model. The inspection device 10 performs training by using a group of captured images of products which are non-defective products in the following procedure. That is, the inspection device 10 inputs the group of captured images of the products which are non-defective products to the present model, and causes the present model to extract n (n is an integer of 1 or more) feature quantities for each local region constituting each captured image.

Next, the inspection device 10 extracts a feature quantity (hereinafter, referred to as "sample feature quantity") of a predetermined ratio (hereinafter, referred to as a "sampling rate") among the n feature quantities extracted for each local region by the present model. The sampling rate is determined for each local region. A method of determining the sampling rate will be described below.

The inspection device 10 stores the sample feature quantity extracted from the n feature quantities extracted for each local region by the present model in association with information indicating a position of the local region in the captured image. Specifically, for example, the inspection device 10 stores the sample feature quantity by creating a memory bank corresponding to a position of the sample feature quantity. Here, the "information indicating the position of the local region in the captured image" is, for example, coordinate information represented in units of pixels. The training is performed by such a method.

The inspection device 10 inspects the product by the sample feature quantity obtained by the training as described above. Specifically, the inspection device 10 inputs the captured image of the product as an inspection target into the present model, causes the present model to extract a feature quantity of the product as an inspection target (hereinafter, referred to as an "inspection target feature quantity") for each local region of the captured image, and outputs information based on a difference between the extracted inspection target feature quantity and the sample feature quantity as an inspection result. Details of the configuration or the process of the inspection device 10 will be described below.

### [Camera 30]

The camera 30 is capable of imaging a product as an inspection target and providing a captured image to the inspection device 10 or the management server 50. The camera 30 is managed by, for example, a person who inspects the product at an inspection site, in the same manner as the inspection device 10. The camera 30 is configured by, for example, a multi-wavelength spectroscopic camera. The multi-wavelength spectroscopic camera includes, for example, a hyperspectral camera, a multispectral camera, and a camera in which a color filter portion of an RGB camera is changed for a predetermined wavelength. In addition, the camera 30 may be an infrared camera having a single wavelength.

### [Management Server 50]

The management server 50 is an information processing apparatus as a server that manages the entire inspection system 1. The management server 50 is managed by, for example, a producer that manufactures a product. The management server 50 can transmit various types of information to the inspection device 10, the camera 30, and an outside, and can execute various processes. Further, the management server 50 can acquire various types of information transmitted from the inspection device 10, the camera 30, and the outside, and can perform various processes.

The management server 50 may have a part or all of the functions described above of the inspection device 10. For example, among the functions described above of the inspection device 10, the management server 50 may have a function of managing the present model and a function of training the present model. In this case, the inspection device 10 can inspect the product by using the present model provided from the management server 50. Thus, a processing load is reduced as compared with a case where the present model is managed by the present model.

That is, the configuration of the inspection system 1 described above is an example, and the inspection system 1 may have a function of implementing the process described above as a whole. Therefore, among the functions that implement the process described above, a part or all of the functions may be shared or may cooperate with each other in the inspection system 1. For example, a part or all of the functions of the inspection device 10 constituting the inspection system 1 may be used as functions of another information processing apparatus, or a part or all of the functions of the other information processing apparatus may be used as the functions of the inspection device 10. Further, a part or all of the functions of the inspection device 10 constituting the inspection system 1 may be transferred to another server (not illustrated). Thus, the process as the entire inspection system 1 is promoted, and the process can be complemented.

### <Hardware Configuration>

### [Hardware Configuration of Inspection Device 10]

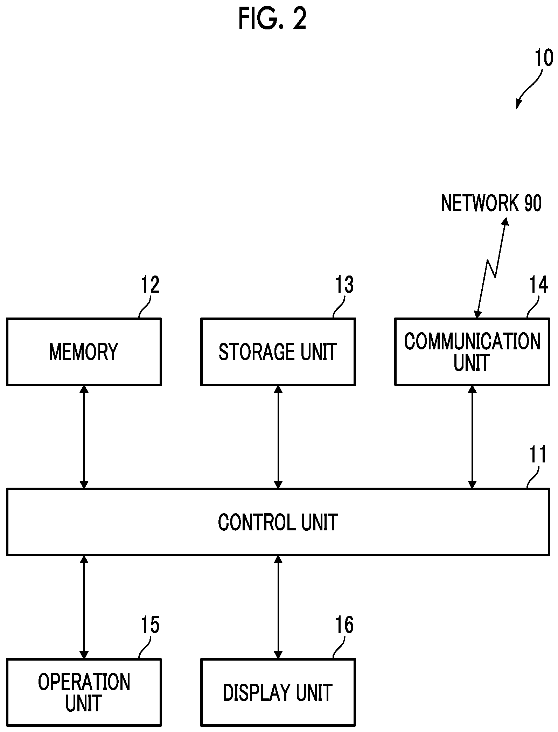

Fig. 2 is a diagram illustrating an example of a hardware configuration of the inspection device 10 to which the present exemplary embodiment is applied.

The inspection device 10 includes a control unit 11, a memory 12, a storage unit 13, a communication unit 14, an operation unit 15, and a display unit 16. Each of these units is connected by a data bus, an address bus, a peripheral component interconnect (PCI) bus, or the like.

The control unit 11 is a processor that controls functions of the inspection device 10 based on execution of various types of software such as an OS (basic software) and application software.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other.

The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The memory 12 is a storage region for storing various types of software, data to be used for executing the software, or the like, and is used as a work area for an arithmetic operation. The memory 12 is configured with, for example, a random access memory (RAM) or the like. A memory bank corresponding to a position of the extracted sample feature quantity is created in the memory 12.

The storage unit 13 is a storage region for storing input data to various types of software, output data from various types of software, or the like. The storage unit 13 is configured with, for example, a hard disk drive (HDD), a solid state drive (SSD), a semiconductor memory, or the like to be used for storing programs, various types of setting data, or the like. The storage unit 13 is provided with a database that stores various types of information.

The communication unit 14 transmits and receives data to and from the inspection device 10 and the outside via the network 90. The operation unit 15 is configured with, for example, a keyboard, a mouse, a mechanical button, and a switch, and accepts input operations.

The operation unit 15 also includes a touch sensor integrally constituting a touch panel with the display unit 16.

The display unit 16 is configured of, for example, a liquid crystal display or an organic electro luminescence (= EL) display to be used for information display, and displays data of an image or a text and the like. The display unit 16 displays a user interface or the like.

### [Hardware Configuration of Management Server 50]

The management server 50 includes each of a control unit, a memory, a storage unit, a communication unit, an operation unit, and a display unit corresponding to each of the control unit 11, the memory 12, the storage unit 13, the communication unit 14, the operation unit 15, and the display unit 16 in Fig. 2.

### <Functional Configuration of Inspection Device 10>

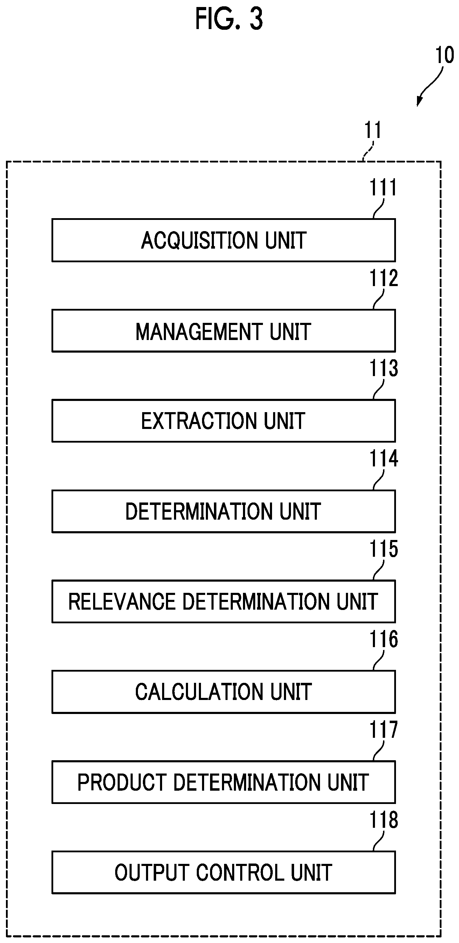

Fig. 3 is a diagram illustrating an example of a functional configuration of the control unit 11 of the inspection device 10.

In the control unit 11 of the inspection device 10, an acquisition unit 111, a management unit 112, an extraction unit 113, a determination unit 114, a relevance determination unit 115, a calculation unit 116, a product determination unit 117, and an output control unit 118 function.

The acquisition unit 111 acquires various types of information. For example, the acquisition unit 111 acquires a captured image of a product as an inspection target captured by the camera 30 (see Fig. 1).

The management unit 112 stores and manages various types of information in a database of the storage unit 13 (see Fig. 2). For example, the management unit 112 stores and manages the captured image of the product as an inspection target, which is acquired by the acquisition unit 111, in the database. The management unit 112 manages an inspection target feature quantity extracted for each local region by the present model, in association with information indicating a position of the local region in the captured image. The management unit 112 further manages a sample feature quantity extracted from n feature quantities extracted for each local region by the present model, in association with information indicating a position of the local region in the captured image. Specifically, for example, the management unit 112 creates and manages a memory bank corresponding to the position of the sample feature quantity in the memory 12 (see Fig. 2).

The extraction unit 113 extracts an inspection target feature quantity for each local region in the captured image by the present model. In addition, the extraction unit 113 extracts a sample feature quantity from the n feature quantities extracted for each local region in the captured image by the present model. The sample feature quantity is extracted based on a sampling rate determined for each local region as described above.

The determination unit 114 determines the sampling rate required for extracting the sample feature quantity by the extraction unit 113 for each local region. The determination unit 114 can determine, for example, a sampling rate according to a variation in space in which a vector of the n feature quantities extracted for each local region by the present model and a vector of the sample feature quantity are represented (hereinafter, referred to as a "feature space").

The relevance determination unit 115 determines whether or not the information indicating the position of the local region constituting the captured image of the product as an inspection target has a predetermined relevance with the information indicating the position of the local region associated with the sample feature quantity. The relevance determination unit 115 can determine that the sample feature quantity has the predetermined relevance in a case where, for example, coordinate information as the information indicating the position of the local region associated with the sample feature quantity is within a predetermined range.

The calculation unit 116 calculates a difference between the inspection target feature quantity extracted for each local region of the captured image by the present model and the sample feature quantity determined to have the predetermined relevance by the relevance determination unit 115. For example, the calculation unit 116 can calculate a distance in the feature space as the difference between the extracted inspection target feature quantity and the sample feature quantity.

The product determination unit 117 determines whether or not the product as an inspection target is a non-defective product or a defective product. The product determination unit 117 determines whether or not the product as an inspection target is a non-defective product or a defective product, based on the difference between the inspection target feature quantity and the sample feature quantity calculated by the calculation unit 116. Specifically, for example, the product determination unit 117 determines whether or not the product as an inspection target is a non-defective product or a defective product, based on the distance in the feature space as the difference between the inspection target feature quantity and the sample feature quantity.

In determination based on the distance in the feature space, the product determination unit 117 determines a threshold value of the distance between the inspection target feature quantity and the sample feature quantity in the feature space. Then, the product determination unit 117 determines that the product as an inspection target is a defective product in a case where the distance between the inspection target feature quantity and the sample feature quantity exceeds the threshold value. On the other hand, in a case where the distance between the inspection target feature quantity and the sample feature quantity does not exceed the threshold value, the product determination unit 117 determines that the product as an inspection target is a non-defective product.

The output control unit 118 performs control to output various types of information. For example, the output control unit 118 performs control to output a result of the determination by the product determination unit 117 as an inspection result of the product. The control of outputting the inspection result by the output control unit 118 includes control of outputting the inspection result to the display unit 16 (see Fig. 2) and control of transmitting the inspection result via the communication unit 14 (see Fig. 2).

### <Flow of Process of Inspection Device 10>

### [Training Phase]

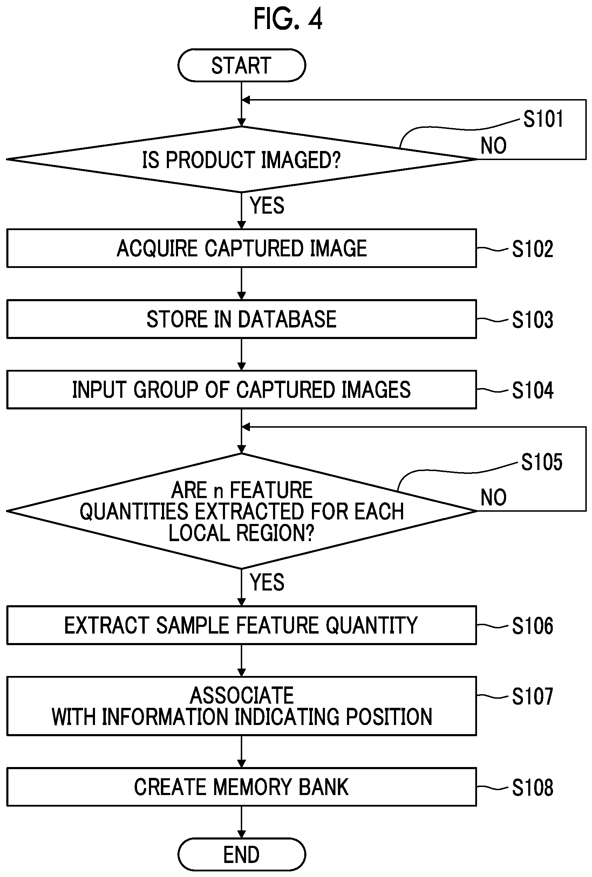

Fig. 4 is a flowchart illustrating an example of a flow of a process in a training phase among processes of the inspection device 10.

In a case where a product as an inspection target is imaged by the camera 30 (YES in step S101), the inspection device 10 acquires the captured image of the product as an inspection target (step S102), and stores the captured image in a database of the storage unit 13 (see Fig. 2) (step S103). Then, the inspection device 10 proceeds to a process in step S104. On the other hand, in a case where the product as an inspection target is not imaged (NO in step S101), the inspection device 10 repeats the determination process in step S101.

The inspection device 10 inputs a group of captured images of products that are non-defective products to the present model (step S104). Then, in the present model, in a case where n feature quantities are extracted for each local region of the captured image of the product (YES in step S105), the inspection device 10 extracts a sample feature quantity (step S106). On the other hand, in the present model, in a case where the n feature quantities are not extracted for each local region of the captured image of the product (NO in step S105), the inspection device 10 repeats the determination process in step S105.

The inspection device 10 associates the sample feature quantity extracted in step S106 with information indicating a position of the local region in the captured image (step S107), and creates a memory bank in the memory 12 (see Fig. 2) (step S108). Thus, the process in the training phase is ended (END).

### [Inference Phase]

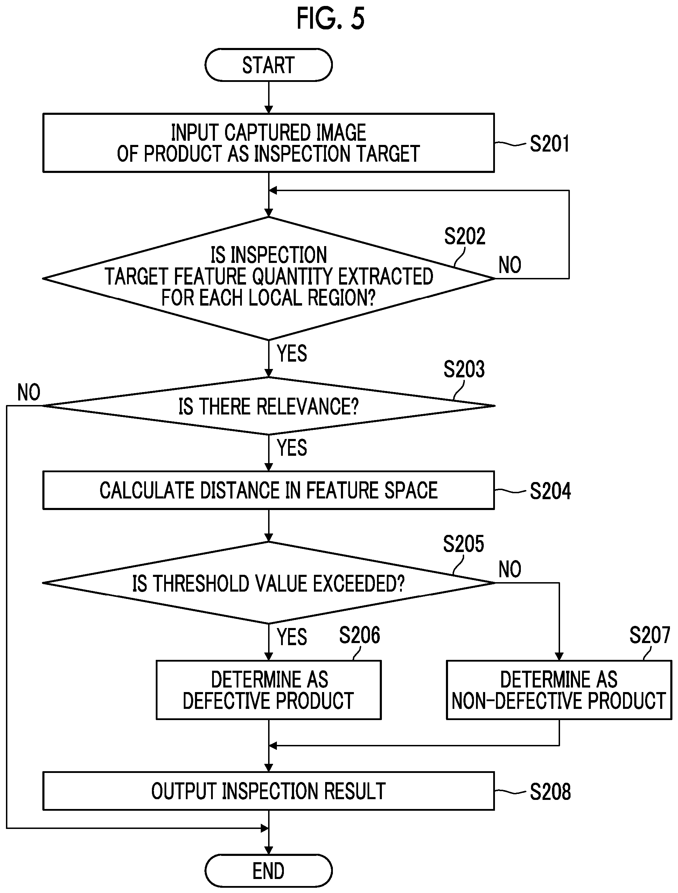

Fig. 5 is a flowchart illustrating an example of a flow of a process in an inference phase among processes of the inspection device 10. In the example in Fig. 5, it is assumed that information based on a difference between an inspection target feature quantity extracted for each local region by the present model and a sample feature quantity is output as an inspection result.

The inspection device 10 inputs a captured image of a product as an inspection target to the present model through the training phase illustrated in Fig. 4 (step S201). Then, in the present model, in a case where the inspection target feature quantity is extracted for each local region (YES in step S202), the inspection device 10 proceeds to a determination process in step S203. On the other hand, in the present model, in a case where the inspection target feature quantity is not extracted for each local region (NO in step S202), the inspection device 10 repeats the determination process in step S202.

In a case where information indicating a position of the local region constituting the captured image of the product as an inspection target and information indicating a position of the local region associated with the sample feature quantity described above have a predetermined relevance (YES in step S203), the inspection device 10 proceeds to a process in step S204. On the other hand, in a case where the information indicating the position of the local region constituting the captured image of the product as an inspection target and the information indicating the position of the local region associated with the sample feature quantity do not have the predetermined relevance (NO in step S203), the inspection device 10 ends the process (END).

The inspection device 10 calculates a distance in a feature space (step S204). Specifically, the inspection device 10 calculates the distance between the inspection target feature quantity and the sample feature quantity in the feature space. In a case where the calculated distance exceeds a predetermined threshold value (YES in step S205), the inspection device 10 determines that the product as an inspection target is a defective product (step S206). On the other hand, in a case where the calculated distance does not exceed the predetermined threshold value (NO in step S205), the inspection device 10 determines that the product as an inspection target is a non-defective product (step S207).

The inspection device 10 outputs an inspection result (step S208), and ends the process (END). Specifically, the inspection device 10 outputs the result of determining that the product is a defective product in step S206 or the result of determining that the product is a non-defective product in step S207 as the inspection result. Thus, the inspection device 10 ends the process in the inference phase.

### <Specific Examples>

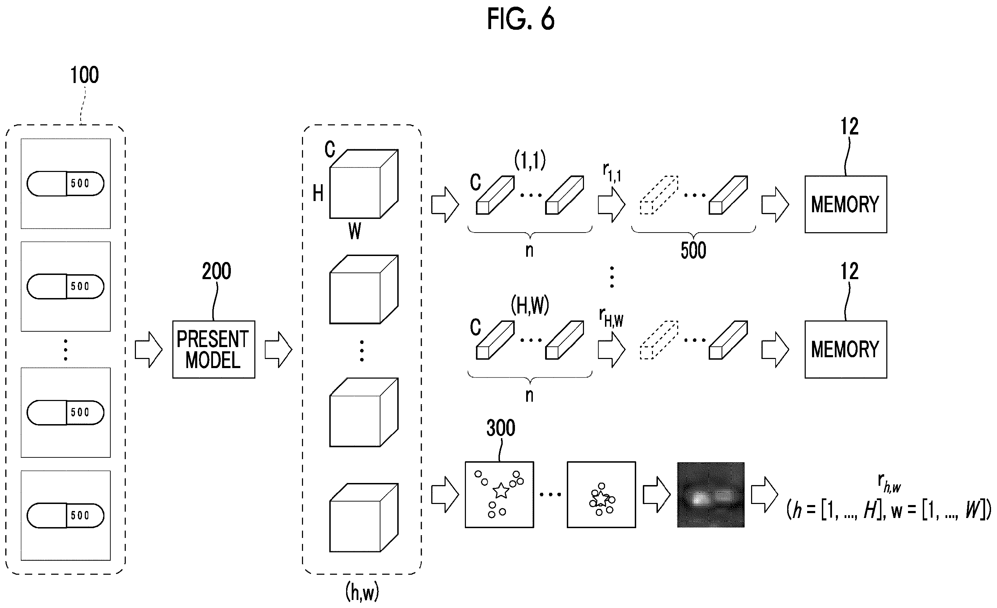

Fig. 6 is a diagram illustrating a specific example of a process in a training phase.

As illustrated in Fig. 6, in the training phase for a present model 200, in a case where a group of captured images 100 of products that are non-defective products is input to the present model 200, the present model 200 extracts n feature quantities for each local region of each captured image 100. "H" and "W" illustrated in Fig. 6 are information indicating a position of a feature quantity corresponding to a certain local region, and are integer values of 1 or more. In addition, "C" is the number of dimensions of the feature quantity.

In a case where the n feature quantities are extracted for each local region of the captured image 100, a sample feature quantity 500 is extracted from the n feature quantities. "(1, 1)" or "(H, W)" illustrated in Fig. 6 is coordinate information as information indicating a position of the sample feature quantity 500 in the certain local region. In addition, "r_{1, 1}" or "r_{H,} w" indicate a sampling rate and a position of the sample feature quantity 500 in the local region. Among these, "r" is the sampling rate, and "1, 1" and "H, W" are coordinate information indicating the position of the sample feature quantity in the local region. In addition, "h, w" are coordinate information indicating a position of the certain local region in the captured image 100. Among these, "h" has a range of 1 to H, and "w" has a range of 1 to W. The sample feature quantity 500 extracted from the n feature quantities is stored in association with the coordinate information. Specifically, a memory bank corresponding to the position of the sample feature quantity 500 is created in the memory 12.

In the example in Fig. 6, the sampling rate is determined according to a variation in a feature space 300 of the n feature quantities extracted for each local region by the present model 200. Specifically, for example, in order to improve robustness to the change included in the group of the captured images 100, the sampling rate may be determined to be higher at a position at which a difference in shape or color of the product is larger in the group of the captured images 100. In the example in Fig. 6, the variation of the n feature quantities in the feature space 300 is quantified by calculating an average of distances from the feature quantities to an average feature quantity.

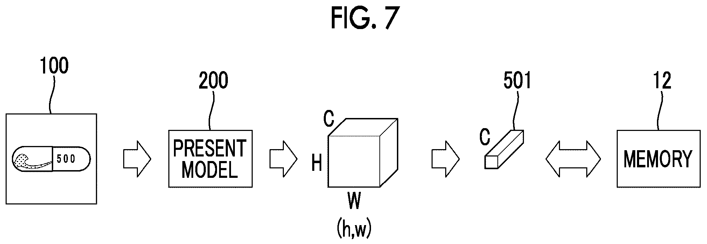

Fig. 7 is a diagram illustrating a specific example of a process in an inference phase.

As illustrated in Fig. 7, in the inference phase using the present model 200, in a case where the captured image 100 of a product as an inspection target is input to the present model 200, an inspection target feature quantity 501 of a local region in the captured image 100 is extracted by the present model 200. "H" and "W" illustrated in Fig. 7 are information indicating a position of a feature quantity in the local region, in the same manner as in Fig. 6 described above, and are integer values of 1 or more. In addition, "C" is the number of dimensions of the feature quantity. "(h, w)" illustrated in Fig. 7 is coordinate information indicating a position of the local region in the captured image 100.

In a case where the inspection target feature quantity 501 is extracted, information based on a difference from the sample feature quantity 500 read from the memory bank of the memory 12 is output as an inspection result. Specifically, a distance in a feature space as a difference between the extracted inspection target feature quantity 501 and the read sample feature quantity 500 is calculated, and the inspection result based on the distance in the feature space is output.

At this time, the sample feature quantity 500 read from the memory bank of the memory 12 includes the coordinate information indicating the position of the local region, which is determined to be within a predetermined range and to have a predetermined relevance. In the example in Fig. 7, since the coordinate information of the local region is "h, w", for example, a determination may be made that the local region having the coordinate information in a range of "h±1, w±1" has a predetermined relevance.

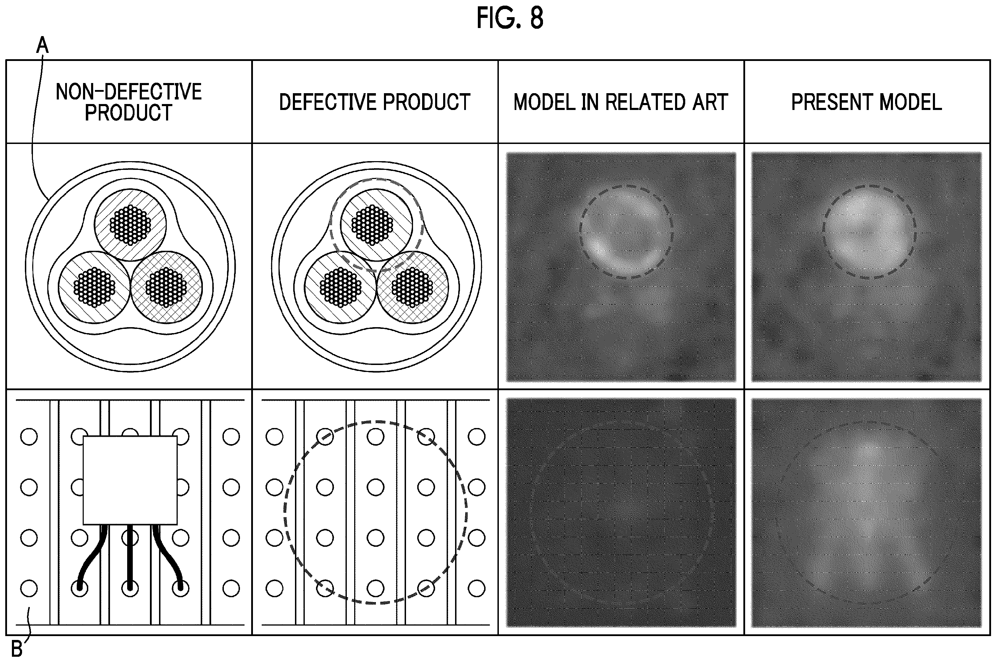

Fig. 8 is a diagram illustrating a specific example of an inspection result.

An upper portion in Fig. 8 illustrates a comparative example of an inspection result using a model in the related art and the inspection result using the present model for an industrial component A. A portion surrounded by a broken line is a portion at which a defect occurs. A product illustrated in the upper portion in Fig. 8 is a cable in which a bundle of three thin cables having different colors is coated. The portion surrounded by the broken line as a portion at which a defect occurs indicates one cable among the three thin cables that are disposed differently.

A lower portion in Fig. 8 illustrates a comparative example of an inspection result using a model in the related art and the inspection result using the present model for an industrial component B. A portion surrounded by a broken line is a portion at which a defect occurs. The portion surrounded by the broken line as a portion at which a defect occurs indicates that a transistor is not disposed at a position at which the transistor is to be disposed (disposition forgetting). In a case where the inspection result using the model in the related art is compared with the inspection result using the present model, it can be seen that the inspection result using the present model clearly illustrates the portions at which the defect occurs in both the upper and lower portions in Fig. 8.

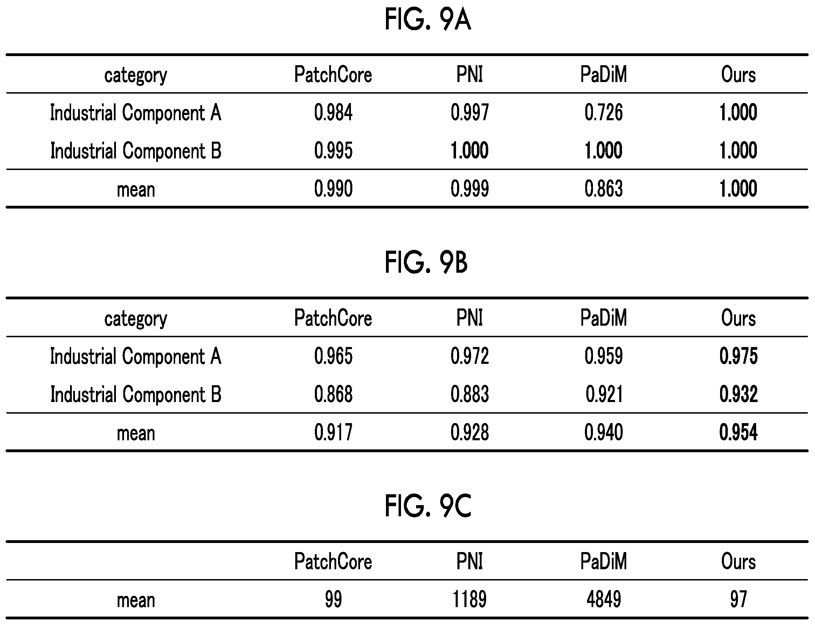

Figs. 9A to 9C are diagrams illustrating evaluation results of a model.

Figs. 9A to 9C illustrate the inspection results in Fig. 8 described above in a numerical form. Among these, in Figs. 9A and 9B, a value of AUROC (Area Under the Receiver Operating Characteristic curve) which is an index used to evaluate performance of a model for detecting a logical abnormality is illustrated for each of the present model and the abnormality determination model in the related art. Fig. 9A illustrates a result of AUROC of a level of a captured image. Fig. 9B illustrates a result of AUROC of a level of a pixel.

All "PatchCore", "PNI", and "PaDiM" illustrated in Figs. 9A and 9B illustrate the abnormality determination models in the related art. In addition, "Ours" indicates the present model. As illustrated in Figs. 9A and 9B, the results of AUROC of the present model are more appropriate as compared with the results of AUROC of the abnormality determination model in both the level of the captured image and the level of the pixel in the related art.

Fig. 9C illustrates an average memory use amount (MB) required for inference for detecting a logical abnormality for each of the present model and the abnormality determination model in the related art. As illustrated in Fig. 9C, the average memory use amount (MB) of the present model is "97", and the average memory use amount is reduced to the same level as the memory use amount "99" of "PatchCore" in the abnormality determination model of the related art.

### <Other Exemplary Embodiments>

While the present exemplary embodiments have been described above, the present invention is not limited to the exemplary embodiments. In addition, effects of the present invention are not limited to the effects disclosed in the exemplary embodiments. For example, any of the entire configuration of the inspection system 1 illustrated in Fig. 1 and the hardware configuration of the inspection device 10 illustrated in Fig. 2 is merely an example for achieving the object of the exemplary embodiment of the present invention, and is not particularly limited.

In addition, the functional configuration of the inspection device 10 illustrated in Fig. 3 is merely an example, and is not particularly limited. As long as the inspection system 1 in Fig. 1 is provided with a function with which the process described above can be executed as a whole, a functional configuration to be used to implement the function is not limited to the example in Fig. 3. Further, the order of the steps of the process of the inspection device 10 illustrated in the flowcharts in Figs. 4 and 5 is merely an example and is not particularly limited. Not only the processes performed in chronological order according to the order of the illustrated steps, but also the processes may not necessarily be performed in chronological order, and may be performed in parallel or individually. Further, the specific examples illustrated in Figs. 6 to 9 are merely examples, and are not particularly limited.

In the exemplary embodiment described above, the inspection system 1 has the configuration including the management server 50, but the inspection system 1 may have a configuration not including the management server 50.

In the exemplary embodiment described above, the inspection device 10 and the camera 30 are separated from each other, but the inspection device 10 may be configured to include an imaging unit having a function of the camera 30.

The present invention can also be applied to a program and a program product.

### (Supplementary Note)

(((1))) An information processing apparatus comprising:
   a processor configured to:
   input a group of captured images of a product that is a non-defective product to a pre-trained classification model, and cause the classification model to extract n (n is an integer of 1 or more) feature quantities for each local region constituting each of the captured images; and
   extract a feature quantity of a predetermined ratio among the extracted n feature quantities as a sample feature quantity, and store the sample feature quantity in association with information indicating a position of the local region in the captured image.
(((2))) The information processing apparatus according to (((1))), wherein the processor is configured to:
   determine the ratio for each local region.
(((3))) The information processing apparatus according to (((2))), wherein the processor is configured to:
   determine the ratio according to a variation in a feature space in which a vector of the extracted n feature quantities is represented.
(((4))) The information processing apparatus according to any one of (((1))) to (((3))), wherein the processor is configured to:
   input a captured image of the product as an inspection target to the pre-trained classification model, and cause the classification model to extract an inspection target feature quantity for each local region in the captured image; and
   output information based on a difference between the extracted inspection target feature quantity and the sample feature quantity.
(((5))) The information processing apparatus according to (((4))), wherein the processor is configured to:
   in a case where a distance between the inspection target feature quantity and the sample feature quantity in a feature space in which a vector of the inspection target feature quantity and a vector of the sample feature quantity are represented exceeds a predetermined threshold value, output information indicating that the product as an inspection target is a defective product, as the information based on the difference.
(((6))) The information processing apparatus according to (((4))), wherein the processor is configured to:
   in a case where the information indicating the position of the local region constituting the captured image of the product as the inspection target has a predetermined relevance with the information indicating the position of the local region associated with the sample feature quantity, output the information based on the difference.
(((7))) The information processing apparatus according to (((6))), wherein the processor is configured to:
   in a case where coordinate information as the information indicating the position of the local region associated with the sample feature quantity is within a predetermined range, output the information based on the difference, as the information having the relevance.
(((8))) An inspection system comprising:
   an imaging section that images a product as an inspection target; and
   an information processing apparatus that performs an inspection based on a captured image of the product,
   wherein the information processing apparatus has a configuration of the information processing apparatus according to any one of (((1))) to (((7))).
(((9))) A program for controlling an information processing apparatus that performs an appearance inspection on a product, the program causing a computer to realize:
   a function of inputting a group of captured images of the product that is a non-defective product to a pre-trained classification model, and causing the classification model to extract n (n is an integer of 1 or more) feature quantities for each local region constituting each of the captured images; and
   a function of extracting a feature quantity of a predetermined ratio among the extracted n feature quantities as a sample feature quantity, and storing the sample feature quantity in association with information indicating a position of the local region in the captured image.

According to (((1))), it is possible to construct an abnormality determination model that is capable of detecting a logical abnormality while suppressing a use amount of a memory, as compared with an abnormality determination model in the related art, which is capable of detecting the logical abnormality in an input image as an inspection target.

According to (((2))), a difference in the ratio of the sample feature quantity extracted from the local region can be provided. Thus, it is possible to extract the sample feature quantity according to the property of the feature quantity of the local region.

According to (((3))), for example, the number of sample feature quantities extracted from a local region having a feature quantity in which a difference in a shape or a color of the product is likely to occur can be increased. As a result, it is possible to improve robustness to a change included in the group of captured images of the non-defective products.

According to (((4))), it is possible to perform an appearance inspection of the product by the abnormality determination model that is capable of detecting the logical abnormality while suppressing the use amount of the memory, as compared with the abnormality determination model in the related art, which is capable of detecting the logical abnormality in the input image as an inspection target.

According to (((5))), it is possible to perform an appearance inspection of the product by the abnormality determination model that is capable of detecting the logical abnormality while suppressing the use amount of the memory, as compared with the abnormality determination model in the related art, which is capable of detecting the logical abnormality in the input image as an inspection target.

According to (((6))), even in a case where a positional deviation occurs in the input image as an inspection target, the appearance inspection by the abnormality determination model can be performed without being affected as long as the positional deviation is within a predetermined range.

According to (((7))), even in a case where a positional deviation occurs in the input image as an inspection target, the appearance inspection by the abnormality determination model can be performed without being affected as long as the positional deviation is within a predetermined range.

According to (((8))), it is possible to construct an abnormality determination model that is capable of detecting a logical abnormality while suppressing a use amount of a memory, as compared with an abnormality determination model in the related art, which is capable of detecting the logical abnormality in an input image as an inspection target.

According to (((9))), it is possible to construct an abnormality determination model that is capable of detecting a logical abnormality while suppressing a use amount of a memory, as compared with an abnormality determination model in the related art, which is capable of detecting the logical abnormality in an input image as an inspection target.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: inspection system
10: inspection device
11: control unit
12: memory
13: storage unit
14: communication unit
15: operation unit
16: display unit
30: camera
50: management server
90: network
111: acquisition unit
112: management unit
113: extraction unit
114: determination unit
115: relevance determination unit
116: calculation unit
117: product determination unit
118: output control unit
100: captured image
200: present model
300: feature space
500: sample feature quantity
501: inspection target feature quantity

## Claims

1. An information processing apparatus comprising:
a processor configured to:
input a group of captured images of a product that is a non-defective product to a pre-trained classification model, and cause the classification model to extract n (n is an integer of 1 or more) feature quantities for each local region constituting each of the captured images; and
extract a feature quantity of a predetermined ratio among the extracted n feature quantities as a sample feature quantity, and store the sample feature quantity in association with information indicating a position of the local region in the captured image.

2. The information processing apparatus according to claim 1, wherein the processor is configured to:
determine the ratio for each local region.

3. The information processing apparatus according to claim 2, wherein the processor is configured to:
determine the ratio according to a variation in a feature space in which a vector of the extracted n feature quantities is represented.

4. The information processing apparatus according to any one of claims 1 to 3, wherein the processor is configured to:
input a captured image of the product as an inspection target to the pre-trained classification model, and cause the classification model to extract an inspection target feature quantity for each local region in the captured image; and
output information based on a difference between the extracted inspection target feature quantity and the sample feature quantity.

5. The information processing apparatus according to claim 4, wherein the processor is configured to:
in a case where a distance between the inspection target feature quantity and the sample feature quantity in a feature space in which a vector of the inspection target feature quantity and a vector of the sample feature quantity are represented exceeds a predetermined threshold value, output information indicating that the product as an inspection target is a defective product, as the information based on the difference.

6. The information processing apparatus according to claim 4, wherein the processor is configured to:
in a case where the information indicating the position of the local region constituting the captured image of the product as the inspection target has a predetermined relevance with the information indicating the position of the local region associated with the sample feature quantity, output the information based on the difference.

7. The information processing apparatus according to claim 6, wherein the processor is configured to:
in a case where coordinate information as the information indicating the position of the local region associated with the sample feature quantity is within a predetermined range, output the information based on the difference, as the information having the relevance.

8. An inspection system comprising:
an imaging section that images a product as an inspection target; and
an information processing apparatus that performs an inspection based on a captured image of the product,
wherein the information processing apparatus has a configuration of the information processing apparatus according to any one of claims 1 to 7.

9. A program for controlling an information processing apparatus that performs an appearance inspection on a product, the program causing a computer to realize:
a function of inputting a group of captured images of the product that is a non-defective product to a pre-trained classification model, and causing the classification model to extract n (n is an integer of 1 or more) feature quantities for each local region constituting each of the captured images; and
a function of extracting a feature quantity of a predetermined ratio among the extracted n feature quantities as a sample feature quantity, and storing the sample feature quantity in association with information indicating a position of the local region in the captured image.

10. An information processing method comprising:
inputting a group of captured images of a product that is a non-defective product to a pre-trained classification model, and causing the classification model to extract n (n is an integer of 1 or more) feature quantities for each local region constituting each of the captured images; and
extracting a feature quantity of a predetermined ratio among the extracted n feature quantities as a sample feature quantity, and storing the sample feature quantity in association with information indicating a position of the local region in the captured image.
